Europäisches Patentamt

European Patent Office

Office européen des brevets

(11) Veröffentlichungsnummer: **0 554 710 A1**

# EUROPÄISCHE PATENTANMELDUNG

(21) Anmeldenummer: 93100748.8

(22) Anmeldetag: **19.01.93**

(51) Int. Cl.5: **H04L 25/06**

(30) Priorität: **07.02.92 DE 4203601**

(43) Veröffentlichungstag der Anmeldung:
**11.08.93 Patentblatt 93/32**

(84) Benannte Vertragsstaaten:
**AT BE CH DE DK ES FR GB IT LI NL SE**

(71) Anmelder: **RICHARD HIRSCHMANN GmbH & Co.**
**Postfach 110**
**W-7300 Esslingen(DE)**

(72) Erfinder: **Gorzellik, Dietrich, Dipl.-Ing.**
**Ulrich-von-Ensingen-Strasse, 5**
**W-7440 Nürtingen(DE)**

(74) Vertreter: **Geyer, Ulrich F. et al**
**Wagner & Geyer Patentanwälte**
**Gewürzmühlstrasse 5**
**W-8000 München 22 (DE)**

(54) Schaltungsanordnung zum Empfang von über einen Wellenleiter übertragenen digitalen Signalen.

(57) Bei einer Schaltungsanordnung zum Empfang von über einen Wellenleiter übertragenen digitalen Signalen, die von einem Störsignal überlagert sind, mit einem optoelektrischen Wandler (21), einer die Signalspitzenwerte des übertragenen Signals auswertenden Auswerteschaltung (24.27.28,31) und einer Entscheidungsschaltung (33) ergibt sich mit geringem schaltungstechnischem Aufwand eine höhere Empfindlichkeit und eine höhere Dynamik sowie eine verringerte Impulsbreitenverzerrung dadurch, daß die Entscheidungsschwelle der Entscheidungsschaltung (33) in der Mitte des empfangenen digitalen Signals liegt.

Fig.2

Die Erfindung betrifft eine Schaltungsanordnung zum Empfang von über einen Wellenleiter übertragenen digitalen Signalen, die von einem Störsignal überlagert sind, mit einem opto-elektrischen Wandler, einer die Signalspitzenwerte des übertragenen Signals auswertenden Auswerteschaltung und einer Entscheidungsschaltung.

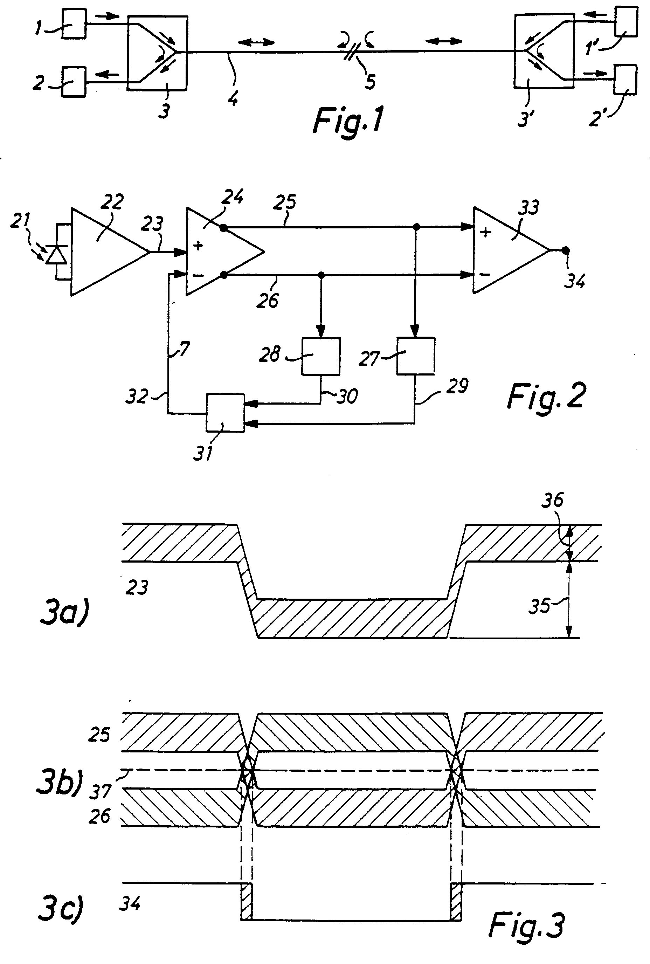

Bei der bidirektionalen Übertragung von digitalen Signalen über einen einzigen Lichtwellenleiter treten auf Grund optischer Reflektionen in den Kopplern oder an Kupplungen des Lichtwellenleiters optische Störsignale auf, die dem optischen Nutzsignal überlagert sind. Eine herkömmliche Übertragungsanordnung für digitale Signale über eine einzige Faser, beispielsweise eine bidirektionale Vollduplex-Signalübertragung, ist in Fig. 1 wiedergegeben. Eine Datenstation, beispielsweise ein Rechner, mit einem Sender 1 und einen Empfänger 2 ist über einen Koppler 3 mit einer optischen Strecke 4, beispielsweise einem Wellenleiter verbunden. Die optische Strecke führt zu einer weiteren Datenstation, die ebenfalls einen Sender 1', einen Empfänger 2' und einen Koppler 3' umfaßt. Auf der optischen Strecke 4 werden digitale Lichtsignale in beiden Richtungen von bzw. zu den Datenstationen übertragen. In Fig. 1 sind mit einem gekrümmten Pfeil jeweils die Stellen in der Übertragungsanordnung angegeben, an denen eine Reflexion auftritt, nämlich im wesentlichen an Kupplungen 5 in der Datenstrecke 4 sowie in den Kopplern 3 bzw. 3', in denen ein Teil des vom jeweiligen Sender 1 bzw. 1' ausgesandten Lichts auf den eigenen Empfänger 2 bzw. 2' reflektiert wird.

Aus der EP-A1-0103 872 und der EP-B1-O 103 873 sind Schaltungsanordnungen der eingangs genannten Art zum Empfang von über einen Wellenleiter übertragenen digitalen Signalen bekannt, denen Störsignale überlagert sind, die beispielsweise von Reflektionen auf der Übertragungsstrecke herrühren. Bei den bekannten Schaltungen wird je ein positiver und ein negativer Spitzenspannungsspeicher in Form von Kondensatoren verwendet, die einerseits an Masse liegen und andererseits über einen Spannungsteiler mit einer Entscheidungsschaltung, beispielsweise einem Komparator, verbunden sind. Für die Speicherung der positiven und negativen Spitzenspannungswerte sind dabei unterschiedliche Signalspitzenwertspeicher vorgesehen, so daß sich diese in ihrem Signalverarbeitungsverhalten unterscheiden. Durch die Unterschiedlichkeit der beiden Signalspitzenwertspeicher für die positiven und negativen Pegel besitzen sie verschiedene Arbeitspunkte, so daß sie auch deshalb ein unterschiedliches Spannungsfehlerverhalten und ein unterschiedliches Temperaturdriftverhalten aufweisen. Dadurch kann die Entscheidungsschwelle für die Entscheidungsschaltung, auch wenn dies gewünscht oder beabsichtigt sein sollte, nicht in der Mitte des optischen Signals liegen. Eine derartige Verschiebung der Entscheidungsschwelle aus der Mitte des optischen Signals verschlechtert die optische Empfängerempfindlichkeit beträchtlich und führt dazu, daß die Amplitude für ein das optische Nutzsignal überlagerndes optisches Störsignal verhältnismäßig gering gehalten werden muß.

Es ist zwar theoretisch möglich, durch Verwendung von speziellen Differentialverstärkern mit geringen Eingangsoffsetfehlern und hoher Verstärkung eine Verschiebung der Entscheidungsschwelle von der Mitte des optischen Signals weg klein zu halten, nicht jedoch vollständig zu verhindern. Auch wenn dies möglich wäre, würde dies dazu führen, daß bei Verwendung derartiger Differentialverstärker eine bipolare Versorgungsspannung bei größeren Geschwindigkeiten des Datensignals notwendig wäre. Darüber hinaus ist eine solche Differentialverstärkerschaltung für größere Datenraten sehr aufwendig und kostenintensiv.

Ein weiterer Nachteil der bekannten Schaltung besteht darin, daß eine Seite der Entscheidungsschaltung bzw. des Ausgangskomparators fest auf dem von den Signalspitzenwertspeichern abgeleiteten Bezugspotential, der abgeleiteten Schaltschwelle liegt. Dies bedeutet, daß im theoretisch günstigsten Fall, wenn die Schaltschwelle in der Mitte des optischen Signals liegt, die differentielle Spannung am Komparatoreingang der halben Amplitude des optischen Signals entspricht. Geht man von einer bestimmten, am Komparatoreingang mindestens benötigten Differentialspannung aus, würde sich die Signalamplitude bei komplementärer Ansteuerung des Komparators auf die Hälfte verringern. Dies bedeutet, daß der Vorverstärker in der bekannten Schaltung eine doppelt so große Signalverstärkung für die gleiche Empfangsempfindlichkeit haben müßte. Geht man also von einem maximal erlaubten Signalhub am Vorverstärker aus, so verringert sich die optische Dynamik des Empfängers auf die Hälfte. Bei gleicher Empfindlichkeit befindet sich der Empfänger daher bereits bei der halben optischen Leistung an der Übersteuerungsgrenze.

Der vorliegenden Erfindung liegt daher die Aufgabe zugrunde, eine Schaltungsanordnung der eingangs genannten Art zu schaffen, die trotz eines geringen, preisgünstigen schaltungstechnischen Aufwands unter Verwendung von Standardbauteilen eine hohe Empfindlichkeit sowie eine hohe Dynamik aufweist und für hohe Datenraten verwendbar ist.

Die gestellte Aufgabe wird erfindungsgemäß dadurch gelöst, daß die Entscheidungsschwelle der Entscheidungsschaltung in der Mitte des empfangenen digitalen Signals liegt.

Auf Grund des erfindungsgemäßen Merkmals kann das Amplitudenverhältnis zwischen dem Störsignal und dem Nutzsignal im Bereich

$$0 \le \frac{\underline{\text{Amplitude des Störsignals}}}{\text{Amplitude des Nutzsignals}} < 1$$

liegen. Wie im weiteren noch ausgeführt werden wird, kann das Störsignal also beinahe so groß wie das Nutzsignal sein.

Wie nachfolgend noch im einzelnen erläutert werden wird, ist auf Grund des erfindungsgemäßen Merkmals die Breite der regenerierten Impulse vom Wert der Amplitude des optischen Eingangssignals prinzipiell unabhängig. Dadurch ist die Impulsbreitenverzerrung bei der erfindungsgemäßen Schaltungsanordnung sehr gering, wobei der durch die Entscheidungsunsicherheiten der Entscheidungsschaltung bedingte Jitter klein ist, da die Entscheidungsschwelle auf dem steilen Teil der Signalflanken liegt.

Die erfindungsgemäße Schaltungsanordnung weist darüber hinaus eine hohe Empfindlichkeit und eine hohe Dynamik auch bei der Verwendung einfachster schaltungstechnischer Mittel und Maßnahmen auf. Durch die hohe Dynamik kann die Übertragungsstrecke in einer Länge bis zur Maximalentfernung ohne Einstellungsarbeiten an den Datenstationen bzw. Endgeräten eingesetzt werden. Die erfindungsgemäße Schaltungsanordnung ist auch für hohe Datenraten einsetzbar.

Auf Grund des erfindungsgemäßen Merkmals ist es trotz Bauteile-Toleranzen möglich, ohne Abgleicharbeiten auszukommen, und ohne daß dadurch die Funktion der Schaltung beeinträchtigt wird. Weiterhin kommt die erfindungsgemäße Schaltungsanordnung nur mit einer positiven Versorgungsspannung aus. Auf Grund der hohen Empfindlichkeit des Empfängers ist mit der erfindungsgemäßen Schaltung trotz Kopplerverlusten eine Übertragung über größere Strecken möglich.

Eine besonders vorteilhafte Ausgestaltung der Erfindung besteht darin, daß die Auswerteschaltung für beide Polaritäten des Signalspannungspegels Signalspitzenwertspeicher für gleiche Polarität aufweist, also zwei positive oder zwei negative Signalspitzenwertspeicher verwendet werden. Der Entscheidungsschaltung werden vorzugsweise komplementäre Signale zugeführt. Dadurch ergibt sich eine größtmögliche Empfängerempfindlichkeit bei größtmöglicher Dynamik.

Gemäß einer weiteren Ausgestaltung der Erfindung sind die Signalspitzenwertspeicher identisch aufgebaut. Dadurch weisen sie das gleiche Spannungsfehler- und Temperaturdriftverhalten auf, da sie sich auf Grund ihres identischen Aufbaus praktisch gleich verhalten. Bei einer nachfolgenden Differenzbildung in der Entscheidungsschaltung werden die Fehler gegeneinander aufgehoben, so daß sich die Empfängerempfindlichkeit auch dadurch wesentlich verbessert.

Ein weiteres vorteilhaftes Merkmal besteht darin, daß die Signalspitzenwertspeicher im gleichen Arbeitspunkt arbeiten. Dies verbessert auf Grund der nachfolgenden Differenzbildung wiederum die Empfängerempfindlichkeit.

Besonders vorteilhaft ist es, wenn die Signalspitzenwertspeicher Komparatoren umfassen. Durch die Verwendung dieser schnellen und genauen Komponenten, die normalerweise auch nur eine unipolare Versorgungsspannung benötigen, können Signalspitzenwertspeicher geschaffen werden, die schnell, genau und kostengünstig sind, so daß sich auch schnellere und empfindlichere optische Empfänger schaffen lassen.

Gemäß einer weiteren vorteilhaften Ausführungsform wird das vom elektro-optischen Wandler bereitgestellte Signal in einem Verstärker mit invertierendem und nichtinvertierendem Ausgang verstärkt. Dabei sind die Ausgänge des Verstärkers vorzugsweise mit jeweils einem Signalspitzenwertspeicher verbunden.

Besonders vorteilhaft ist es, wenn eine Arbeitspunktregelstufe verwendet wird, die den Arbeitspunkt des Verstärkers so regelt, daß die invertierten und nichtinvertierten Ausgangssignale auf gleichem Potential liegen. Dadurch ist eine Codierung des Datensignals, bei der die Anzahl logischer "H-" und "L"-Werte im Mittel gleich ist, nicht erforderlich. Es wird nur eine Grunddatenrate verlangt, damit die Empfängerregelung arbeiten kann. Diese Grunddatenrate ist über die Zeitkonstante in der Empfängerschaltung festlegbar.

Die erfindungsgemäße Schaltungsanordnung ist insbesondere bei der bidirektionalen Übertragung von Digitalsignalen über einen einzigen Lichtwellenleiter anwendbar.

Obgleich die erfindungsgemäße Schaltungsanordnung insbesondere für die Kompensation von Störsignalen besonders geeignet ist, die durch Reflektionen auf der Übertragungsstrecke auftreten, lassen sich mit ihr auch alle anderen Störsignale beseitigen, die auf andere Weise als durch Reflektionen entstehen.

Die Erfindung wird nachstehend anhand der Zeichnungen näher erläutert. Es zeigen:

Fig. 1    eine herkömmliche Übertragungsanordnung für die bidirektionale Vollduplex-Übertragung für digitale Signale über einen einzigen Lichtwellenleiter,

Fig. 2    ein Prinzipschaltbild einer Schaltungsanordnung gemäß der Erfindung,

Fig. 3    Signalverläufe zur Erläuterung der erfindungsgemäßen Schaltungsanordnung in schematischer Darstellung,

Fig. 4    Signalverläufe zur Erläuterung der Pulsbreitenverzerrung bei herkömmlichen Schaltungsanordnungen,

Fig. 5    Signalverläufe mit unterschiedlichen Flankensteilheiten und des damit verbundenen, unterschiedlichen Jitters am Ausgang der Entscheidungsschaltung, und

Fig. 6    eine detailliertere Ausführungsform der in Fig. 2 dargestellten, erfindungsgemäßen Schaltungsanordnung,

Fig. 7    verschiedene Ausführungsformen positiver Signalspitzenwertspeicher, in schematischer Darstellung,

Fig. 8    verschiedene Ausführungsformen des Spannungshalteglieds in einem positiven Signalspitzenwertspeicher, in schematischer Darstellung,

Fig. 9    verschiedene Ausführungsmöglichkeiten eines negativen Signalspitzenwertspeichers, in schematischer Darstellung und

Fig.10    unterschiedliche Ausführungsformen des Spannungshalteglieds für einen negativen Spitzenwertspeicher, in schematischer Darstellung.

Bei der in Fig. 2 als Prinzipschaltbild dargestellten Ausführungsform der Erfindung ist ein optoelektrischer Wandler in Form einer Photodiode 21 mit einem Vorverstärker 22, beispielsweise in Form eines Transimpedanzverstärkers oder eines Hochimpedanzverstärkers, verbunden. Eine derartige optische Vorverstärkerschaltung ist allgemein bekannt und nicht Gegenstand der vorliegenden Erfindung.

Das von der Vorverstärkerschaltung 22 auf der Leitung 23 bereitgestellte elektrische Signal gelangt an einen weiteren Verstärker 24, nämlich an den positiven Eingang eines Differentialverstärkers, der einen nichtinvertierenden und einen invertierenden Ausgang 25 bzw. 26 aufweist. Der nicht-invertierende Ausgang 25 des Verstärkers 24 ist über einen ersten Signalspitzenwertspeicher 27 und der invertierende Ausgang 26 des Verstärkers 24 ist über einen zweiten Signalspitzenwertspeicher 28 verbinden. Sie stehen über die Leitung 29 bzw. 30 mit jeweils einem Eingang einer Arbeitspunktregelstufe 31 in Verbindung, deren Ausgang über eine Leitung 32 mit dem Minus-Eingang des Verstärkers 24 verbunden ist.

Der nicht-invertierende Ausgang 25 des Verstärkers 24 ist mit dem Plus-Eingang und der invertierende Ausgang 26 des Verstärkers 24 ist mit dem Minus-Eingang eines Komparators 33 verbunden, an dessen Ausgang 34 das regenerierte digitale Nutzsignal bereitgestellt wird.

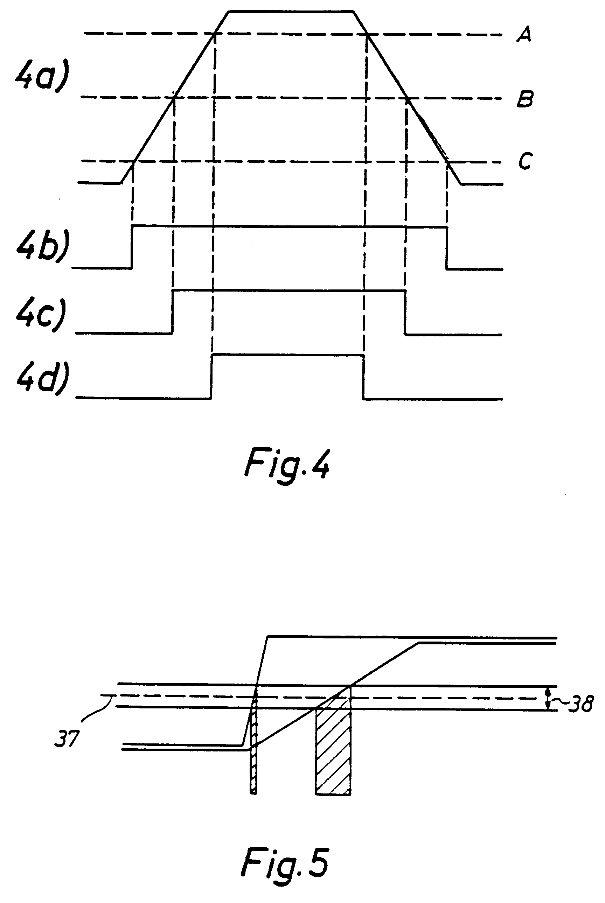

Die in Fig. 2 dargestellte erfindungsgemäße Ausführungsform und deren Funktionsweise wird nachfolgend unter Zuhilfenahme der in Fig. 3 dargestellten Signalverläufe erläutert. Am Ausgang des Vorverstärkers 22, also der Eingangsleitung 23 der aus den Baukomponenten 24, 27, 28 und 31 bestehenden Auswerteschaltung liegt ein in Fig. 3a dargestelltes Signal 23 an, welches aus dem Nutzsignalanteil 35 und dem Störsignalanteil 36 besteht, wobei der Störsignalanteil 36 beispielsweise durch Reflektionen an Kupplungen 5 oder Kopplern 3, 3' auf dem optischen Übertragungsweg 4 (vgl. Fig. 1) entstanden sein kann.

Der Verstärker 24 verstärkt das Eingangssignal derart, daß der Betrag der Signalverstärkung für die beiden Signalausgänge 25 und 26 gleich ist. Das am Ausgang 25 des Verstärkers 24 auftretende, nicht-invertierte Signal wird im ersten Signalspitzenwertspeicher 27 und das am Ausgang 26 des Verstärkers 24 auftretende Signal wird im zweiten Signalspitzenwertspeicher 28 gespeichert. Die an den Ausgängen des Verstärkers 24 auftretenden Signalverläufe sind in Fig. 3b mit den Bezugszeichen für die Ausgänge des Verstärkers 24, nämlich als Signale 25 und 26 bezeichnet.

Die Arbeitspunktregelstufe 31 erzeugt aus den über die Leitungen 29 und 30 bereitgestellten Spitzenwertsignalen ein Regelungssignal für den Verstärker 24, das den Arbeitspunkt des Verstärkers in der Weise beeinflußt, daß die Spitzenspannungssignale auf den Leitungen 29 und 30 auf gleichem Potential liegen. Wie aus Fig. 3b ersichtlich ist, liegen die Augenmuster der Signale 25 und 26 daher deckungsgleich übereinander, und die Potentiale sind bei positiver Signalspitzenspannungsspeicherung einerseits und bei negativer Signalspitzenspannungsspeicherung andererseits identisch, was in Fig. 3b dadurch zum Ausdruck kommt, daß sämtliche positiven Pegel und sämtliche negativen Pegel der Signale 25 und 26 gleich sind.

Dieses Regelungsverfahren hat zur Folge, daß für die der Auswerteschaltung nachgeschalteten Entscheidungsschaltung, die im vorliegenden Ausführungsbeispiel der Komparator 33 ist, die Entscheidungsschwelle 37 in der Mitte der Signale 25 und 26 liegt. Die Entscheidungsschwelle 37 ist in Fig. 3b strichliniert eingezeichnet. Demzufolge werden sämtliche Störsignale durch die Differenzbildung im Komparator 33 kompensiert und am Ausgang 34 des Komparators 33 liegt ein störsignalfreies, regeneriertes Nutzsignal an, das mit dem Bezugszeichen 34 versehen ist (vgl. Fig. 3c)

Die in den Fig. 3 dargestellten Signalverläufe ergeben sich bei eingeschwungener Regelung.

Auf Grund der Tatsache, daß bei der erfindungsgemäßen Schaltungsanordnung nur ein Signalspitzenwertspeichertyp verwendet wird, nämlich nur zwei positive oder zwei negative Signalspitzenwertspeicher, können sie identisch aufgebaut sein und ein identisches Spannungsfehler- und Temperaturdriftverhalten sowie einen gleichen Arbeitspunkt besitzen. Durch die Differenzbildung in der Entscheidungsschaltung 33 werden diese Gleichtaktfehler beseitigt, so daß die Empfängerschaltung auf Grund der Bereitstellung komplementärer Signale für die Entscheidungsschaltung 33 eine große Empfängerempfindlichkeit bei hoher Dynamik aufweist.

Der Vollständigkeit halber sei darauf hingewiesen, daß bei der erfindungsgemäßen Schaltungsanordnung keine Codierung des Datensignals verlangt wird, bei der die Anzahl logischer "H"- und "L"-Pegel im Mittel gleich sein muß. An Hand von Fig. 3 und Fig. 4 wird nachfolgend ein weiterer Vorteil der vorliegenden Erfindung erläutert, wonach die Impulsbreite des regenerierten Nutzsignals bei der erfindungsgemäßen Schaltungsanordnung unabhängig von den Amplitudenwerten des optischen Eingangssignals ist.

Fig. 4a zeigt einen Puls des optischen Eingangssignales. Je nachdem, welcher Pegel A, B und C für die Entscheidungsschwelle gewählt wird, ergeben sich unterschiedliche Impulsbreiten des regenerierten Ausgangssignals, wie dies für die Entscheidungsschwellen C, B und A aus den Fig. 3b, 3c und 3d zu entnehmen ist. Mit anderen Worten, herkömmliche Empfängerschaltungen können Pulsbreitenverzerrungen nicht vermeiden, wenn optische Signale in unterschiedlichen Eingangsleistungsbereichen auftreten.

Wie aus Fig. 3, insbesondere Fig. 3b, ersichtlich, ist bei der erfindungsgemäßen Schaltungsanordnung die Impulsbreite des regenerierten Signals prinzipiell unabhängig von dem Amplitudenwert des optischen Eingangssignals, weil der Komparator die Differenz von einander komplementären Signalen bildet, und dadurch die Amplitude des optischen Eingangssignals auf die Impulsbreiten des regenerierten Signals keinen Einfluß haben kann. Die erfindungsgemäße Schaltungsanordnung verhindert also die Impulsbreitenverzerrungen, die bei herkömmlichen Schaltungsanordnungen für unterschiedliche Amplitudenwerte des optischen Eingangssignals auftreten.

Ein weiterer Vorteil der vorliegenden Erfindung besteht darin, daß das regenerierte digitale Signal nur einen geringen Jitter aufweist, der durch Entscheidungsunsicherheiten der Entscheidungsschaltung 33 grundsätzlich nicht vermieden werden kann, mit der erfindungsgemäßen Schaltungsanordnung jedoch sehr klein ist. Dies ist deshalb der Fall, weil die Entscheidungsschwelle (vgl. Fig. 3b) im steilsten Bereich der Impulsflanken der Signale 25 und 26 liegt. Dementsprechend ist der Jitter im regenerierten Ausgangssignal 34 der Entscheidungsschaltung 33 klein, wie dies aus Fig. 3c zu ersehen ist.

Selbstverständlich hängt das Maß des im regenerierten Nutzsignal auftretenden Jitters von der Flankensteilheit des optischen Eingangssignals ab, wie dies aus Fig. 5 zu ersehen ist. Bei großer Flankensteilheit ist der Jitter am Ausgang 34 des Komparators 33 kleiner als bei Signalen mit kleiner Flankensteilheit, wie dies unmittelbar aus Fig. 5 entnehmbar ist. In Fig. 5 ist die Entscheidungsschwelle strichliniert und der Unsicherheitsbereich der Lage der Entscheidungsschwelle durch den Bereich 38 dargestellt. In jedem Fall ist der Jitter bei Verwendung der erfindungsgemäßen Schaltungsanordnung jedoch relativ klein, weil die Entscheidungsschwelle 37 immer im steilsten Bereich der Pulsflanken liegt.

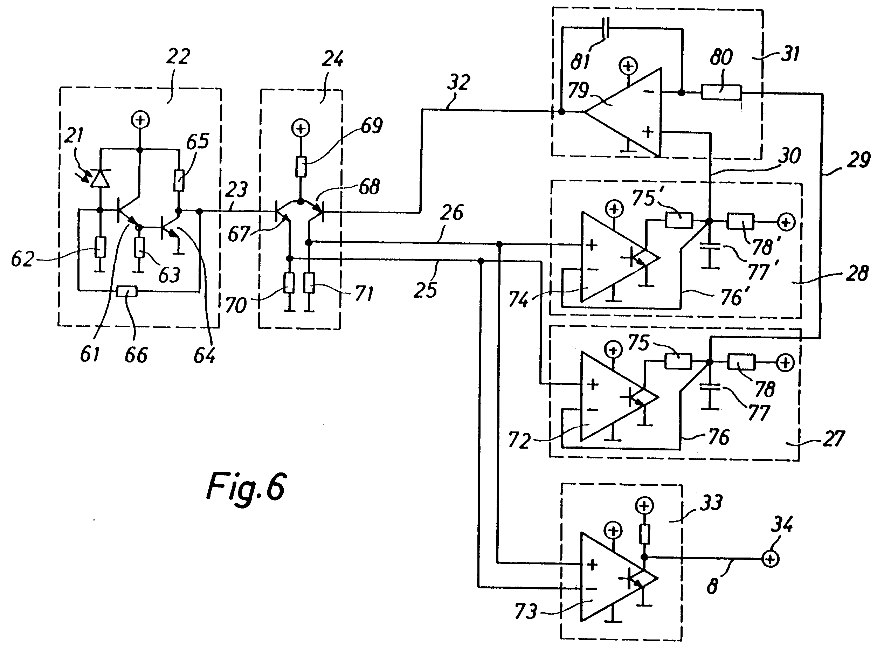

Fig. 6 zeigt eine ins einzelne gehende Ausführungsform der in Fig: 2 schematisch dargestellten, erfindungsgemäßen Schaltungsanordnung. Schaltungsteile und Schaltungselemente in Fig. 6, die denen in Fig. 2 entsprechen, sind mit denselben Bezugszeichen versehen und werden nicht nochmals erläutert.

Bei dem Vorverstärker 22 ist die Kathode der Photodiode 21 mit der positiven Anschlußklemme und die Anode mit der Basiselektrode eines Transistors 61 verbunden. Die Basis und der Emitter des Transistors 61 liegen über Widerstände 62 bzw. 63 am Bezugspotential, beispielsweise an Masse. Der Kollektor des Transistors 61 ist mit der Versorgungsspannungsquelle verbunden, ebenso der Kollektor eines weiteren Transistors 64 über einen weiteren Widerstand 65. Während die Basis des weiteren Transistors 64 mit dem Emitter des Transistors 61 verbunden ist, liegt der Emitter des Transistors 64 an Masse. Der Ausgang des Vorverstärkers, nämlich der Kollektor des Transistors 64 ist über einen Rückkoppelwiderstand 66 auf die Basis des Transistors 61 rückgekoppelt.

Der Verstärker 24 umfaßt zwei Transistoren 67 und 68, wobei der Kollektor des Transistors 67 und der Emitter des Transistors 68 verbunden sind und über einen Vorwiderstand 69 an der positiven Versorgungsklemme liegen. Der Basis des Transistors 67 wird das Ausgangssignal des Vorverstärkers 22 über die Leitung 23 zugeführt, während die Basis des Transistors 68 über die Leitung 32 das Ausgangssignal der Arbeitspunktregelstufe 31 zugeleitet erhält. Der Emitter des Transistors 67 und der Kollektor des Transistors 68 liegt jeweils über Widerstände 70 bzw. 71 an Masse.

Am Emitter des Transistors 67 wird über den Ausgang bzw. die Leitung 25 das nicht-invertierte Ausgangssignal abgegriffen und einerseits dem Plus-Eingang eines Komparators 72 des ersten Signalspitzenwertspeichers 27 und andererseits dem Minus-Eingang des Komparators 73 der Entscheidungsschaltung 33 zugeleitet. Das invertierte Ausgangssignal des Verstärkers 24 wird über den Anschluß bzw. die Leitung 26 am Kollektor des Transistors 68 abgegriffen und einerseits den Plus-Eingang eines Komparators 74 des zweiten Signalspitzenwertspeichers 28 und andererseits dem Plus-Eingang des Komparators 73 der Entscheidungsschaltung 33 zugeleitet.

EP 0 554 710 A1

Die beiden Signalspitzenwertspeicher 27 und 28 sind identisch und mit gleichen Bauteilen aufgebaut, so daß nur einer der beiden Signalspitzenwertspeicher beschrieben werden muß.

Das Ausgangssignal des Komparators 72 des Signalspitzenwertspeichers 27 gelangt über einen Widerstand 75 auf die Leitung 29, die dem einen Eingang der Arbeitspunktregelstufe 31 zugeleitet wird. Der dem Komparator 72 abgewandte Anschluß des Widerstands 75 ist über eine Rückkoppelleitung 76 mit dem Minus-Eingang des Komparators 72 sowie mit einem Kondensator 77 verbunden, dessen anderer Anschluß an Masse liegt. Der Verbindungspunkt zwischen dem Widerstand 75 und dem Kondensator 77 ist mit einem weiteren Widerstand 78 verbunden, dessen anderer Anschluß an einer positiven Spannungsquelle liegt.

Die entsprechenden Bauteile des zweiten Signalspitzenwertspeichers 28 sind mit denselben Bezugszeichen wie im ersten Signalspitzenwertspeicher 27, jedoch mit einem Apostroph versehen. Das Ausgangssignal des zweiten Signalspitzenwertspeichers 28 gelangt über die Leitung 30 an den anderen Anschluß der Arbeitspunktregelstufe 31.

Einem Differentialverstärker 79 der Arbeitspunktregelstufe 31 wird an seinem Plus-Eingang das Ausgangssignal des zweiten Signalspitzenwertspeichers 28 über die Leitung 30 und seinem Minus-Eingang das Ausgangssignal des einen Signalspitzenwertspeichers 27 über die Leitung 29 und den Widerstand 80 zugeleitet. Der Ausgang des Differentialverstärkers 79 gelangt über die Leitung 32 als Regelungssignal zum Verstärker 24 und über einen Rückkoppelkondensator 81 zum Minus-Eingang zurück.

Am Ausgang des Komparators 73 der Entscheidungsschaltung 33 liegt das regenerierte Nutzsignal an und kann an der Ausgangsklemme 34 abgegriffen werden.

Das in Fig. 6 dargestellte Ausführungsbeispiel einer erfindungsgemäßen Schaltungsanordnung verwendet Komparatoren zur Spitzenspannungsgleichrichtung. Dadurch ergeben sich auf Grund solcher schnellen und genauen Komponenten, die darüber hinaus nur eine unipolare Versorgungsspannung benötigen, schnelle, genaue und kostengünstige Signalspitzenwertspeicher. Die erfindungsgemäße Schaltungsanordnung kann daher auch für schnelle und empfindliche optische Empfänger eingesetzt werden.

Für den Vorverstärker 22 können Transimpedanzverstärker oder Hochimpedanzverstärker mit oder ohne Verstärkungsregelung und mit oder ohne, jedoch vorzugsweise ohne Signalbegrenzung verwendet werden. Der Verstärker 24 kann im Verstärker 22 mit integriert sein. Darüber hinaus ist es auch möglich, den Vorverstärker 22 intern gleichspannungs- bzw. wechselspannungsmäßig zu koppeln.

Der Verstärker 24 kann ein Verstärkertyp mit Komplementärausgang unter Einflußmöglichkeit auf die Gleichspannungs-Arbeitspunkte der invertierenden und nicht-invertierenden Ausgänge sein. Der Verstärker 24 kann mit oder ohne Verstärkungsregelung, mit oder ohne, jedoch vorzugsweise ohne Signalbegrenzung arbeiten, wobei Verstärkungen kleiner gleich 1 und größer gleich 1 möglich sind. Auch der Verstärker 24 kann intern gleichspannungs- oder wechselspannungsmäßig gekoppelt sein.

Für die Signalspitzenwertspeicher 27, 28 können jeweils positive oder negative Speicher verwendet werden.

Die positiven oder negativen Signalspitzenwertspeicher 27 bzw. 28 können in unterschiedlichster Weise unter Verwendung von einem Verstärker bzw. einem Komparator und einem Spannungshalteglied mit Auf- und Entladezeitkonstanten aufgebaut sein.

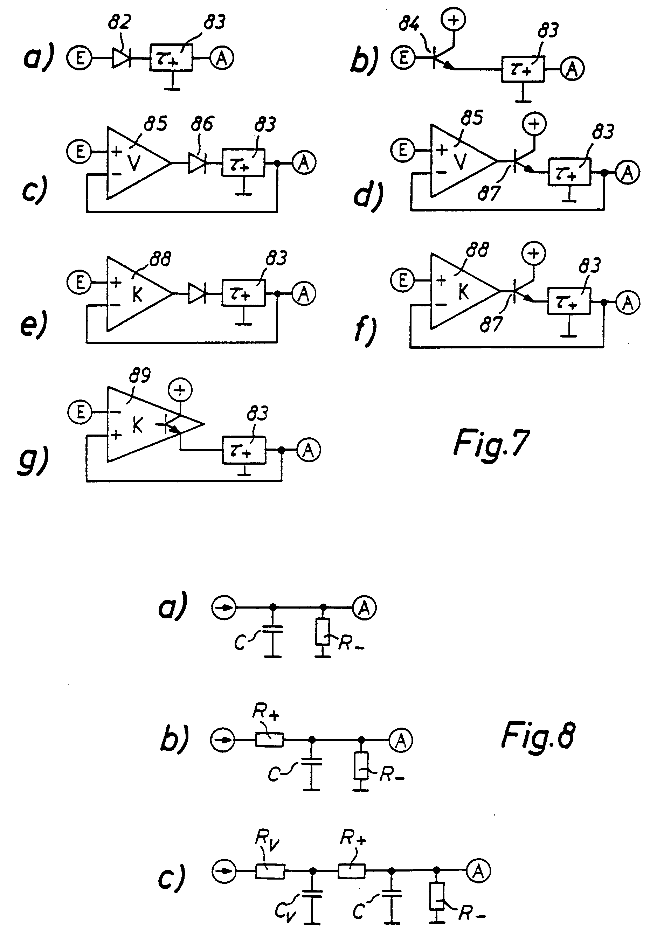

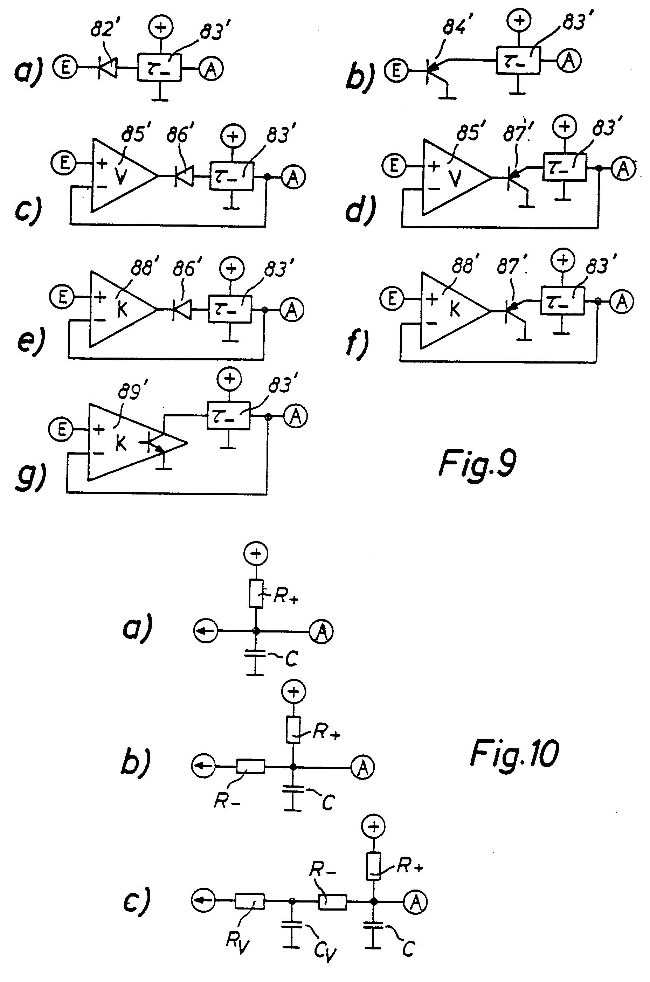

Bevorzugte Ausführungsformen für positive Spitzenspannungsspeicher sind in Fig. 7a bis g und bevorzugte Ausführungsformen negativer Spitzenspannungsspeicher sind in den Fig. 9a bis 9g schematisch wiedergegeben. Bevorzugte Ausführungsformen für positive Spannungshalteglieder zum Einsatz in den positiven Spitzenspannungsspeichern sind schematisch in den Fig. 8a bis 8c und bevorzugte Ausführungsformen negativer Spannungshalteglieder für die Verwendung in den negativen Spitzenspannungspeichern sind in den Fig. 10a bis 10c schematisch dargestellt. In den positiven und negativen Spitzenspannungsspeichern der Fig. 7 und 9 sind die positiven Spannungshalteglieder mit + bzw. -, die Operationsverstärker mit V, die Komparatoren mit K, die Eingangsklemmen E und die Ausgangsklemmen mit A bezeichnet. In den Ausführungsformen der Spannungshalteglieder gemäß den Fig. 8 und 10 sind die Eingangsklemmen mit einem nach rechts bzw. nach links gerichteten Pfeil und die Ausgangklemmen mit A bezeichnet.

Beim positiven Spitzenspannungsspeicher gemäß Fig. 7a gelangt das Eingangssignal an die Anode einer Diode 82, deren Kathode mit einem positiven Spannungshalteglied 83 verbunden ist, das ein Ausgangssignal abgibt und - wie im weiteren anhand der Fig. 8 erläutert wird - mit Masse verbunden ist. Diese Anordnung zur positiven Spitzenwerterfassung stellt die einfachste Möglichkeit unter Verwendung einer Diode dar. Ein derartiger positiver Spitzenspannungsspeicher hat den Vorteil, daß er schnell ist, kostengünstig gefertigt werden kann und eine einfache Handhabung der Zeitkonstanten ermöglicht, wobei jedoch der Spitzenwert ungenau und mit Offset-Spannung behaftet ist, sowie am Eingang E eine starke Belastung auftritt.

Bei der in Fig. 7b dargestellten Ausführungsform liegt das Eingangssignal an der Basiselektrode eines Transistors 84 an, dessen Kollektor mit der Plus-Spannungsquelle, und dessen Emitter mit dem Spannungshalteglied 83 verbunden ist, das, wie in Fig. 7b, das Ausgangssignal bereitstellt und an Masse liegt. Diese Ausgestaltung stellt die einfachste Möglichkeit der positiven Spitzenwerterfassung mit einem Transistor dar. Die Vorteile liegen bei dieser Ausführungsform darin, daß der Spitzenspannungsspeicher schnell ist, kostengünstig gefertigt werden kann, eine einfache Handhabung der Zeitkonstanten ermöglicht und am Eingang E eine geringe Belastung auftritt. Dagegen ist der Spitzenwert mit einer Offset-Spannung behaftet und ungenau, und die zulässigen Basis-Emitterspannungen müssen eingehalten werden.

Beim Ausführungsbeispiel gemäß Fig. 7c liegt das Eingangssignal am positiven Eingang eines Operationsverstärkers 85 an, dessen Ausgang mit der Anode einer Diode 86 verbunden ist, deren Kathode mit dem Spannungshalteglied 83 in Verbindung steht, welches das Ausgangssignal abgibt und an Masse liegt. Das Ausgangssignal des Spannungshalteglieds 83 wird auf den Minus-Eingang des Operationsverstärkers 85 zurückgeführt. Die Schaltungsanordnung mit dem Operationsverstärker 85 und der Diode 46 stellt eine Verbesserung der positiven Spitzenwerterfassung gegenüber dem Ausführungsbeispiel gemäß Fig. 7a insofern dar, als der Spitzenwert ohne Offsetspannung behaftet und daher genauer ist, sowie bei einfacher Handhabung der Zeitkonstanten auch eine günstige Lösung für langsame Spitzenspannungspeicher ergibt. Die Nachteile dieser Ausführugsform liegen darin, daß sie für schnelle Spitzenspannungsspeicher teuer ist, sehr schnelle Spitzenspannungsspeicher nicht realisiert werden können und eine starke Belastung des Operationsverstärkerausgangs auftritt.

Das Ausführungsbeispiel gemäß Fig. 7d unterscheidet sich gegenüber dem von Fig. 7c dadurch, daß die Diode 86 durch einen Transistor 87 ersetzt wird, dessen Basiselektrode mit dem Ausgang des Operationsverstärkers 85, dessen Kollektor mit der Plus-Spannungsquelle und dessen Emitter mit dem Spannungshalteglied 83 verbunden ist. Diese Ausführungsform gemäß Fig. 7d mit einem Operationsverstärker und einem Transistor stellt eine Verbesserung des in Fig. 7b dargestellten positiven Spitzenspannungsspeichers insofern dar, als ein genauerer Spitzenwert ohne Offset-Spannung und eine geringe Belastung des Operationsverstärkerausgangs bei dennoch einfacher Handhabung der Zeitkonstanten auftritt, und diese Ausführungsform für langsame Spitzenspannungsspeicher günstiger ist. Dagegen ist diese Ausführungsform für schnelle Spitzenspannungsspeicher teuer und für sehr schnelle Spitzenspannungsspeicher nicht realisierbar. Die zulässigen Basis-Emitterspannungen müssen eingehalten werden.

Der in Fig. 7e schematisch dargestellte positive Spitzenspannungsspeicher unterscheidet sich von der in Fig. 7c dargestellten Ausführungsform dadurch, daß statt eines Operationsverstärkers 85 ein Komparator 88 verwendet wird. Der in Fig. 7e dargestellte Spitzenspannungsspeicher mit einem Komparator und einer Diode zur positiven Spitzenwerterfassung stellt eine Verbesserung zu der in Fig. 7c dargestellten Ausführungsform insofern dar, als er einen genauen Spitzenwert ohne Offset-Spannung aufweist und sehr günstig für langsame Spitzenspannungsspeicher und günstig für schnelle Spitzenspannungsspeicher ist, wobei sehr schnelle Spitzenspannungsspeicher realisiert werden können, allerdings mit dem Nachteil, daß die Handhabung der Zeitkonstanten schwieriger ist und eine starke Belastung des Komparatorausgangs auftritt.

Der in Fig. 7f dargestellte positive Spitzenspannungsspeicher unterscheidet sich gegenüber der in Fig. 7d dargestellten Ausführungsform dadurch, daß der Operationsverstärker durch den Komparator 88 ersetzt ist. Gegenüber der in Fig. 7d dargestellten Ausführungsform hat der Spitzenspannungsspeicher gemäß Fig. 7f den Vorteil, daß die Belastung des Komparatorausgangs bei genauem Spitzenwert ohne Offset-Spannung gering ist, und daß diese Schaltungsanordnung für langsame Spitzenspannungsspeicher sehr günstig, für schnelle Spitzenspannungsspeicher günstig ist und sehr schnelle Spitzenspannungsspeicher realisiert werden können, allerdings mit dem Nachteil, daß die Handhabung der Zeitkonstanten schwieriger ist und die zulässigen Basis- Emitterspannungen eingehalten werden müssen.

Fig. 7g zeigt einen positiven Spitzenspannungsspeicher, bei dem das Signal dem negativen Eingang eines Komparators 89 mit positivem Emitterausgang zugeleitet wird, wobei der offene Emitterausgang mit dem an Masse liegenden Spannungshalteglied 83 verbunden ist, dessen Ausgangssignal auf den Plus-Eingang des Komparators 89 zurückgeführt wird. Diese Art von Spitzenspannungsspeicher stellt gegenüber der in Fig. 7f dargestellten Ausführungsform eine Verbesserung dar. Es ergeben sich wiederum genaue Spitzenwerte ohne Offset-Spannung und die Schaltungsanordnung ist insbesondere auch sehr günstig für langsame Spitzenspannungsspeicher und günstig für schnelle Spitzenspannungsspeicher, wobei sehr schnelle Spitzenspannungsspeicher geschaffen werden können. Die Handhabung der Zeitkonstanten ist jedoch schwieriger. Komparatoren mit offenem Emitterausgang sind gering verbreitet.

In den Fig. 9a bis 9g sind Ausführungsformen für negative Spitzenspannungsspeicher angegeben, die hinsichtlich ihres Schaltungsaufbaus und den damit erreichten Verbesserungen bzw. den unterschiedlichen Anpassungen an verschiedene Anwendungsformen den jeweiligen Ausführungsformen 7a bis 7g für positive Spitzenspannungsspeicher entsprechen. Die den in Fig. 7a bis 7g entsprechenden Bauteile sind in den Fig. 9a bis 9g mit denselben, jedoch mit einem Apostroph markierten Bezugszeichen versehen.

Die Ausführungsform eines negativen Spitzenspannungsspeichers gemäß Fig. 9a entspricht der von Fig. 7a, wobei das Eingangssignal in diesem Falle an die Kathode der Diode 82' gelegt ist, deren Anode mit dem Spannungshalteglied 83' mit Auf- und Entladezeitkonstanten verbunden ist, welches in diesem Falle zusätzlich auch an eine positive Spannungsquelle angeschlossen ist. Die Vorteile dieser einfachsten Möglichkeit eines negativen Spitzenspannungsspeichers mit Diode entsprechen denen, wie sie im Zusammenhang mit Fig. 7a beschrieben wurden. Um weitere Wiederholungen zu vermeiden, entsprechen die Vorteile der Ausführungsformen gemäß Fig. 9b bis f den jeweils entsprechenden Ausführungsformen positiver Spitzenspannungsspeicher gemäß den Fig. 7b bis f.

Die Ausführungsform gemäß Fig. 9b unterscheidet sich gegenüber derjenigen von Fig. 9a lediglich dadurch, daß statt der Diode 82' ein Transistor 84' verwendet wird. In Fig. 9c ist ein negativer Spitzenspannungsspeicher mit einem Operationsverstärker 85' und einer Diode 86' wiedergegeben, wobei der Ausgang des Operationsverstärkers 85' mit der Kathode der Diode 86' verbunden ist, wogegen deren Anode mit dem Spannungshalteglied 83' in Verbindung steht. Die Ausführungsform in Fig. 9d unterscheidet sich von derjenigen von Fig. 9c dadurch, daß die Diode 86' durch einen Transistor 87' ersetzt ist, dessen Basiselektrode mit dem Ausgang des Operationsverstärkers 85', dessen Kollektor geerdet und dessen Emitter mit dem Spannungshalteglied 83' verbunden ist. Im Ausführungsbeispiel von Fig. 9e ist der Operationsverstärker 85' gemäß Fig. 9c durch einen Komparator 88' ersetzt, ebenso wie in Fig. 9f im Vergleich zu Fig. 9d.

Fig. 9g zeigt schließlich eine Ausführungsform für einen negativen Spitzenspannungsspeicher, bei dem ein Komparator 89' mit offenem Kollektorausgang verwendet wird. Hierbei liegt der im Komparator 89' integrierte Transistor mit seinem Emitter an Masse und mit seinem Kollektor am Spannungshalteglied 83'. Eine Verbesserung dieser Ausführungsform gegenüber Fig. 9f besteht darin, daß derartige Komparatoren mit offenem Kollektorausgang weit verbreitet sind, wobei wiederum genaue Spitzenwerte ohne Offset-Spannung erreicht werden und diese Ausführungsform für langsame Spitzenspannungsspeicher sehr günstig und für schnelle Spitzenspannungsspeicher günstig sind. Darüber hinaus sind sehr schnelle Spitzenspannungsspeicher realisierbar. Die Handhabung der Zeitkonstanten ist bei dieser Ausführungsform allerdings schwieriger.

Fig. 8a zeigt ein Ausführungsbeispiel für ein positives Spannungshalteglied, bei dem das Eingangssignal sowohl einem Spannungshaltekondensator C als auch einem Entladewiderstand R__ zugeleitet wird. Der jeweils andere Anschluß des Spannungshaltekondensators C und des Entladewiderstands R__ liegt an Masse, wobei das Ausgangssignal am Spannungshaltekondensator C abgegriffen wird. Bei dieser Ausführungsform eines positiven Spannungshalteglieds ist eine Zeitkonstante definiert. Dieses Spannungshalteglied wird vorzugsweise im Zusammenhang mit den positiven Spitzenspannungsspeichern gemäß den Fig. 7a bis 7d für langsame und schnelle Spitzenspannungsspeicher ohne oder mit Operationsverstärkern verwendet. Der Vorteil eines solchen Spannungshalteglieds besteht darin, daß die Haltezeitkonstante definiert ist. Allerdings ist die Ladezeitkonstante nicht definiert und normalerweise sehr schnell und auch die Belastung des Ladestromkreises ist stark und nicht definiert.

Die in Fig. 8b dargestellte Ausführungsform eines positiven Spannungshalteglieds unterscheidet sich von dem in Fig. 8a dadurch, daß ein Aufladewiderstand R+ vorgeschaltet ist. Diese Schaltungsanordnung definiert zwei Zeitkonstanten und wird vorzugsweise in Zusammenhang mit positiven Spitzenspannungsspeichern gemäß der Fig. 7e bis g für langsame und schnelle Spitzenspannungsspeicher mit Komparatoren verwendet. Die Ausführungsform gemäß Fig. 8d hat den Vorteil, daß sowohl die Haltezeitkonstante als auch die Ladezeitkonstante definiert ist, und sich eine definierte Belastung des Ladestromkreises ergibt.

Bei der in Fig. 8c dargestellten Ausführungsform eines positiven Spannungshalteglieds liegt an einem Grundaufladungswiderstand $R_V$ das Eingangssignal an. Der Ausgang dieses Grundaufladungswiderstands $R_V$ ist mit einem Grundaufladungskondensator $C_V$ verbunden, der mit seinem anderen Anschluß an Masse liegt. Der sich daran anschließende Teil der Schaltungsanordnung entspricht der in Fig. 8d dargestellten Ausführungsform. Mit der in Fig. 8c wiedergegebenen Schaltungsvariante für ein positives Spannungshalteglied sind drei Zeitkonstanten definiert. Ein derartiges Spannungshalteglied wird vorzugsweise im Zusammenhang mit den Ausführungsformen eines positiven Spitzenspannungsspeichers gemäß den Fig. 7e bis 7g für schnelle und sehr schnelle Spitzenspannungsspeicher mit Komparatoren verwendet. Der Vorteil des positiven Spannungshalteglieds gemäß Fig. 8c besteht insbesondere darin, daß sowohl die Haltezeitkonstante als auch die Ladezeitkonstante definiert ist, und daß eine Grundaufladung zur zeitlichen Optimierung des Ladevorgangs bei sehr kurzen Ladezeitkonstanten definiert ist. Darüber hinaus ist die Belastung des Ladestromkreises definiert.

In Fig. 10 sind Ausführungsformen für negative Spannungshalteglieder dargestellt, die den negativen Spitzenspannungsspeichern, vorzugsweise im Zusammenhang mit den in Fig. 9a bis f dargestellten Ausführungsformen verwendbar ist.

In Fig. 10a ist ein negatives Spannungshalteglied dargestellt, bei dem das Eingangssignal am Verbindungspunkt eines Spannungshaltekondensators C und eines Aufladewiderstands R+ liegt, wobei der dem Verbindungpunkt abgewandter Anschluß des Spannungshaltekondensators C an Masse und der dem Verbindungspunkt abgewandte Anschluß des Aufladewiderstands R+ an einer positiven Betriebsspannungsquelle liegt. Das Ausgangssignal wird am Verbindungspunkt zwischen Spannungshaltekondensator C und Aufladewiderstand R+ ab genommen. Entsprechend dem in Fig. 8a dargestellten Ausführungsbeispiel für ein positives Spannungshalteglied definiert das negative Spannungshalteglied gemäß Fig. 10a eine Zeitkonstante. Diese Schaltungsanordnung wird vorzugsweise mit den negativen Spitzenspannungspeichern gemäß Fig. 9a bis d für langsame und schnelle Spitzenspannungsspeicher ohne oder mit Operationsverstärkern verwendet und weist dieselben Eigenschaften auf wie die Schaltungsanordnung gemäß Fig. 8a.

Das in Fig. 10b dargestellte Spannungshalteglied unterscheidet sich gegenüber Fig. 10a lediglich dadurch, daß ein Entladewiderstand R__ vorgeschaltet ist. Dadurch sind zwei Zeitkonstanten definiert und diese Ausführungsform ist bevorzugt für die in den Fig. 9e bis 9g dargestellten negativen Spitzenspannungsspeichern für langsame und schnelle Spitzenspannungsspeicher mit Komparatoren verwendbar, wobei auch hier wiederum dieselben Vorteile gelten, wie sie im Zusammenhang mit dem positiven Spannungshalteglied gemäß Fig. 8b beschrieben sind.

Das in Fig. 10c dargestellte Beispiel für ein Spannungshalteglied unterscheidet sich von der Ausführungsform gemäß Fig. 10b dadurch, daß dieser ein Grundaufladungskondensator $C_V$ mit an Masse liegenden anderem Anschluß und ein in Reihe liegender Grundaufladungswiderstand $R_V$ vorgeschaltet ist. Auf diese Weise sind wiederum drei Zeitkonstanten definiert und diese Ausführungsform ist für die negativen Spitzenspannungsspeicher gemäß Fig. 9c bis 9g, also für schnelle und sehr schnelle Spitzenspannungsspeicher mit Komparatoren besonders geeignet. Die Vorteile der Schaltungsanordnung von Fig. 10c sind dieselben wie die bei dem positiven Spannungshalteglied entsprechend Fig. 8c.

**Patentansprüche**

1.  Schaltungsanordnung zum Empfang von über einen Wellenleiter übertragenen digitalen Signalen, die von einem Störsignal überlagert sind, mit einem optoelektrischen Wandler, einer die Signalspitzenwerte des übertragenen Signals auswertenden Auswerteschaltung und einer Entscheidungsschaltung,
    dadurch **gekennzeichnet,** daß die Entscheidungsschwelle (37) der Entscheidungsschaltung (24, 27, 28, 31) in der Mitte des empfangenen digitalen Signals (23) liegt.

2.  Schaltungsanordnung nach Anspruch 1, dadurch gekennzeichnet, daß die Entscheidungsschaltung (33) komplementäre Signale (25, 26) zugeleitet erhält.

3.  Schaltungsanordnung nach Anspruch 1 oder 2, dadurch gekennzeichnet, daß die Auswerteschaltung (24, 27, 28, 31) für beide Polaritäten des Signalspannungspegels Signalspitzenwertspeicher (27, 28) für gleiche Polarität aufweist.

4.  Schaltungsanordnung nach einem der vorhergehenden Ansprüche, dadurch gekennzeichnet, daß die Spitzenwertspeicher (27, 28) identisch aufgebaut sind.

5.  Schaltungsanordnung nach einem der vorhergehenden Ansprüche, dadurch gekennzeichnet, daß die Spitzenwertspeicher (27, 28) im gleichen Arbeitspunkt arbeiten.

6.  Schaltungsanordnung nach einem der vorhergehenden Ansprüche, dadurch gekennzeichnet, daß die Spitzenwertspeicher (27, 28) Komparatoren (72, 74) umfassen.

7.  Schaltungsanordnung nach einem der vorhergehenden Ansprüche, dadurch gekennzeichnet, daß das vom optischen Wandler (21 bzw. 22) bereitgestellte Signal (23) in einem Verstärker (24) mit invertierendem und nichtinvertierendem Ausgang verstärkt wird.

8.  Schaltungsanordnung nach Anspruch 7, dadurch gekennzeichnet, daß die Ausgänge (25, 26) des Verstärkers (24) mit jeweils einem Signalspitzenwertspeicher (27 bzw. 28) verbunden sind.

9.  Schaltungsanordnung nach einem der vorhergehenden Ansprüche, gekennzeichnet durch eine Arbeitspunktregelstufe (31), die den Arbeitspunkt des Verstärkers (24) so regelt, daß die invertierten und nichtinvertierten Ausgangssignale (25, 26) auf gleichem Potential liegen.

9

**10.** Schaltungsanordnung nach einem der vorhergehenden Ansprüche, gekennzeichnet durch die Verwendung bei der bidirektionalen Übertragung von digitalen Signalen über einen einzigen Lichtwellenleiter (4).

Fig.1

Fig.2

3a)

3b)

3c)

Fig.3

4a)

A

B

C

4b)

4c)

4d)

Fig.4

37

~38

Fig.5

Fig.6

EP 0 554 710 A1

a) E ⊳ 82 [τ+] 83 A

b) E 84 ⊕ [τ+] 83 A

c) E +/− V 85 ⊳ 86 [τ+] 83 A

d) E +/− V 85 ⊕ 87 [τ+] 83 A

e) E +/− K 88 ⊳ [τ+] 83 A

f) E +/− K 88 ⊕ 87 [τ+] 83 A

g) E −/+ K 89 ⊕ [τ+] 83 A

*Fig.7*

a) ⊕→ C R−  A

b) ⊕→ R+ C R−  A  *Fig.8*

c) ⊕→ R_V C_V R+ C R−  A

Fig.9

Fig.10

| EINSCHLÄGIGE DOKUMENTE | | | EP 93100748.8 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) | |
| X | DE - A - 3 934 384 (KE KOMMUNIKATIONSELEKTRONIK) * Fig. 1,3; Spalte 1, Zeilen 6-9; Spalte 2, Zeile 29 - Spalte 3, Zeile 7 * -- | 1-10 | H 04 L 25/06 | |
| A | US - A - 4 459 699 (MONTICELLI) * Fig. 2; abstract * ---- | 1-9 | | |
| | | | RECHERCHIERTE SACHGEBIETE (Int. Cl.⁵) | |
| | | | H 04 L | |

Der vorliegende Recherchenbericht wurde für alle Patentansprüche erstellt.

| Recherchenort WIEN | Abschlußdatum der Recherche 06-05-1993 | Prüfer DRÖSCHER |
|---|---|---|